(19) Europäisches Patentamt
European Patent Office
Office européen des brevets

(11) **EP 3 605 797 A1**

(12) **EUROPÄISCHE PATENTANMELDUNG**

(43) Veröffentlichungstag:
**05.02.2020  Patentblatt 2020/06**

(21) Anmeldenummer: **18186845.6**

(22) Anmeldetag: **01.08.2018**

(51) Int Cl.:
*H02K 3/18* (2006.01)      *H02K 15/04* (2006.01)
*H02K 3/30* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Brach, Karsten**
  **13589 Berlin (DE)**
• **Centner, Matthias**
  **10555 Berlin (DE)**

(54) **ZAHNSPULE FÜR EINEN STATOR EINER ELEKTRISCHEN ROTIERENDEN MASCHINE**

(57)    Die Erfindung betrifft eine Zahnspule (12) für einen Stator (10) einer elektrischen rotierenden Maschine (2), welche einen Leiter (18) aufweist, der eine geschlossene Leiterschleife bildet, wobei die Zahnspule (12) einen Nutabschnitt (14) aufweist, wobei sich an den axialen Enden des Nutabschnitts (14) jeweils ein Wickelkopfabschnitt (16) anschließt. Damit die Zahnspule (12) bei einer hohen Stromtragfähigkeit und einer geringen Zahnbreite einsetzbar ist, wird vorgeschlagen, dass der Leiter (18) der Zahnspule (12) in den Wickelkopfabschnitten (16) jeweils einen ersten Bereich (8a) einer ersten Biegung und zumindest einen zweiten Bereich (8b) einer zweiten Biegung aufweist, wobei die zweite Biegung eine zur ersten Biegung gegensätzliche Orientierung aufweist.

FIG 3

**Beschreibung**

Die Erfindung betrifft eine Zahnspule für einen Stator für eine elektrische rotierende Maschine.

Darüber hinaus betrifft die Erfindung einen Stator für eine elektrische rotierende Maschine mit einem magnetfeldführenden Statorelement und derartigen Zahnspulen.

Ferner betrifft die Erfindung eine elektrische rotierende Maschine mit mindestens einem Stator.

Überdies betrifft die Erfindung ein Verfahren zur Herstellung einer Zahnspule für einen Stator einer elektrischen rotierenden Maschine.

Derartige Zahnspulen werden insbesondere in elektrischen Großmaschinen, beispielsweise Motoren oder Generatoren, welche beispielsweise mit einer Spannung von mindestens 1 kV und einer Leistung von mindesten 1 MW betreibbar sind, eingesetzt. Bei der hier verwendeten Variante einer Drehstromwicklung umgeben beide Seiten der Windung denselben Zahn. Eine derartige Anordnung ermöglicht besonders einfache Wicklungen mit kurzen Wickelköpfen. Eine mögliche minimale Zahnbreite hängt wesentlich von den ausführbaren Biegeradien des Wickeldrahtes ab, wobei der Biegeradius von der Leitergeometrie abhängt. Die Leitergeometrie wird unter Anderem durch die erforderliche Stromtragfähigkeit definiert. Bei relativ langen Spulen besteht zudem das Problem, die Spulenseiten ausreichend stark gegen den Zahn zu drücken, da die Spule die Neigung hat, in der Mitte auszubeulen. Dieser Effekt tritt verstärkt auf, je größer der Leiterquerschnitt und die Zahl nebeneinander liegender Leiter ist.

Die Offenlegungsschrift EP 3 176 924 A1 beschreibt ein Herstellungsverfahren für eine geschlossene Formspule eines Ständerwicklungssystems einer elektrischen rotierenden Maschine aus einer Rohspule. Die Formspule wird für eine Zweischichtwicklung verwendet. Ein Spulenquerschnitt weist mehrere Windungen mit zueinander isolierten Leitern auf, welche wiederum mehrere zueinander isolierte Teilleiter umfassen.

Die Offenlegungsschrift EP 3 297 131 A1 beschreibt einen Stator für eine elektrische rotierende Maschine, welcher ein Statorblechpaket mit Spulenstäben und mindestens eine Statorwickelkopfplatine mit einem isolierenden Grundkörper aufweist. Um die axiale Länge des Stators zu verringern, wird vorgeschlagen, dass in den isolierenden Grundkörper Leiterbahnen integriert sind, wobei die mindestens eine Statorwickelkopfplatine auf einer Stirnseite des Statorblechpakets aufliegt und wobei die Leiterbahnen mit den Spulenstäben stoffschlüssig verbunden sind. Die Spulenstäbe weisen jeweils mehrere Teilleiter auf, die jeweils mit einer Teilleiterisolierung umwickelt sind.

Die Offenlegungsschrift EP 1 207 613 A2 beschreibt einen Spulenaufbau mit zumindest zwei Endspulenstücken mit einem U-förmigen Ende und einem offenen Ende, wobei das offene Ende ein erstes Ende und ein zweites Ende aufweist, und wobei das zweite Ende eine Anschlusslänge größer als das erste Ende hat. Der Spulenaufbau umfasst zumindest ein Mittenspulenstück, das zwischen den Endspulenstücken mit dem U-förmigen Ende und dem offenen Ende gestapelt ist, wobei das offene Ende dritte Enden mit einer Anschlusslänge gleich dem ersten Ende aufweist. Darüber hinaus umfasst der Spulenaufbau zumindest zwei Zwischenspulenstücke, von denen jedes separat zwischen einem Endspulenstück und einem Mittenspulenstück mit U-Form und einem offenen Ende liegt, wobei das offene Ende außerdem vierte Enden mit einer Anschlusslänge kürzer als die ersten und die dritten Enden aufweist und wobei das erste und das dritte Ende mit einem benachbarten vierten Ende verbunden sind.

Die Patentschrift US 3,837,072 beschreibt eine Statorspule mit einer Windung zur Anordnung in Wicklungsnuten einer Drehstrommaschine, bei der die Spulenseiten in Form von Röbelstäben durch Bildung von zwei haarnadelförmigen Bündeln von Litzenschlaufen hergestellt werden, wobei die Enden der Litzenschlaufen in jedem Bündel unterschiedliche Krümmungsradien aufweisen und die Enden der Litzenschlaufen jedes Bündels in Längsrichtung verschoben werden.

Die Offenlegungsschrift DE 10 2004 044 986 A1 beschreibt eine permanenterregte Synchronmaschine. Um eine erhöhte Kupferfüllung in Nuten der Synchronmaschine zu erreichen, wird vorgeschlagen, dass die Synchronmaschine einen Stator, der parallelflankige Nuten aufweist, die mit einem Wicklungssystem aus Flachdrähten versehen sind, aufweist, wobei die Flachdrähte jeweils einen Zahn umfassen und eine Zahnspule bilden, wobei die Flachdrähte hochkant gewickelt sind, so dass jeweils die schmalere Seite des Flachdrahtes zum Zahn weist und jede Zahnspule zumindest zwei Lagen Flachdrähte aufweist.

Der Erfindung liegt die Aufgabe zugrunde, eine Zahnspule für einen Stator einer elektrischen rotierenden Maschine anzugeben, welche bei einer hohen Stromtragfähigkeit und einer geringen Zahnbreite einsetzbar ist.

Die Aufgabe wird erfindungsgemäß durch eine Zahnspule für einen Stator einer elektrischen rotierenden Maschine gelöst, welche einen Leiter aufweist, der eine geschlossene Leiterschleife bildet, wobei die Zahnspule einen Nutabschnitt aufweist, wobei sich an den axialen Enden des Nutabschnitts jeweils ein Wickelkopfabschnitt anschließt, wobei der Leiter der Zahnspule in den Wickelkopfabschnitten jeweils einen ersten Bereich einer ersten Biegung und zumindest einen zweiten Bereich einer zweiten Biegung aufweist, wobei die zweite Biegung eine zur ersten Biegung gegensätzliche Orientierung aufweist.

Ferner wird die Aufgabe erfindungsgemäß durch einen Stator für eine elektrische rotierende Maschine mit einem magnetfeldführenden Statorelement und derartigen Zahnspulen gelöst, wobei das magnetfeldführende Statorelement Nuten und Zähne aufweist, wobei die Zahnspulen in den Nuten angeordnet sind und jeweils einen Zahn des magnetfeldführenden Statorelements umschließen.

Darüber hinaus wird die Aufgabe erfindungsgemäß durch eine elektrische rotierende Maschine mit mindestens einem Stator gelöst.

Überdies wird die Aufgabe erfindungsgemäß durch ein Verfahren zur Herstellung einer Zahnspule für einen Stator einer elektrischen rotierenden Maschine gelöst, wobei eine geschlossene Rohspule, bereitgestellt wird, welche einen Leiter aufweist, der eine geschlossene Leiterschleife bildet, wobei ein Nutabschnitt bereitgestellt wird, wobei Wickelkopfabschnitte bereitgestellt werden, welche an den axialen Enden des Nutabschnitts angeordnet werden, wobei der Leiter in den Wickelkopfabschnitten jeweils in einem ersten Bereich in eine erste Richtung und zumindest in einem zweiten Bereich in eine zweite Richtung gebogen wird, wobei die erste Richtung und die zweite Richtung gegensätzlich orientiert sind.

Die in Bezug auf die Zahnspule nachstehend angeführten Vorteile und bevorzugten Ausgestaltungen lassen sich sinngemäß auf den Stator, die elektrische rotierende Maschine und das Herstellungsverfahren übertragen.

Der Erfindung liegt die Überlegung zugrunde, eine Zahnspule anzugeben, welche in einem, insbesondere hochpoligen, Stator mit sehr geringer Zahnbreite und einer hohen Leistung von beispielsweise 1 MW einsetzbar ist. Durch die hohe Leistung ist eine Geometrie des Leiters der Zahnspule mit einem großen Leiterquerschnitt erforderlich, wobei die Zahnspule einen minimalen Biegeradius, welcher von der Leitergeometrie abhängig ist, aufweist. Um die Zahnspule, welche einen Nutabschnitt und jeweils einen an den axialen Enden des Nutabschnitts anschließenden Wickelkopfabschnitt aufweist, auf einem Zahn des Stators anzuordnen, welcher eine geringere Breite als den doppelten minimalen Biegeradius des Leiters aufweist, ist die Zahnspule so ausgestaltet, dass der Leiter in den Wickelkopfabschnitten jeweils einen ersten Bereich einer ersten Biegung und zumindest einen zweiten Bereich einer zweiten Biegung aufweist. Dabei weist die zweite Biegung eine zur ersten Biegung gegensätzliche Orientierung auf. Eine gegensätzliche Orientierung einer Biegung ist insbesondere eine Krümmung des Leiters in die exakt gegensätzliche Richtung. Beispielsweise ist der Leiter, vom Nutabschnitt aus in Axialrichtung betrachtet, im ersten Bereich rechtsgekrümmt und im zweiten Bereich linksgekrümmt ausgeführt, sodass die zweite Biegung im Verhältnis zur ersten Biegung gegensätzlich orientiert ausgeführt ist. Aufgrund der gegensätzlichen Orientierungen der Biegungen ist der Leiterabstand im Nutabschnitt geringer als der doppelte minimale Biegeradius, ohne dass sich eine Wickelkopfausladung signifikant vergrößert. Darüber hinaus drücken die Spulenseiten, aufgrund der gegensätzlichen Orientierungen der Biegungen, über die gesamte axiale Länge des Nutabschnitts ausreichend stark gegen den Zahn, sodass ein Ausbeulen in der Mitte zumindest minimiert wird.

Darüber hinaus ist der Stator einer, insbesondere hochpoligen, elektrischen rotierenden Maschine durch die geringere Zahnbreite kompakter herstellbar, wodurch für die elektrische rotierende Maschine weniger Bauraum benötigt wird. Die Herstellung einer derartigen Zahnspule ist einfach und kostengünstig, da nur wenige Fertigungsschritte erforderlich sind.

In einer bevorzugten Ausgestaltung ist die Zahnspule achsensymmetrisch zu einer radialen Symmetrieachse ausgeführt. Beispielsweise ist die radiale Symmetrieachse axial in der Mitte des Nutabschnitts verlaufend angeordnet und verläuft senkrecht zur Axialrichtung. Durch die Symmetrie wird der Platzbedarf der Zahnspule optimiert und die Fertigung der elektrischen rotierenden Maschine vereinfacht.

In einer weiteren vorteilhaften Ausgestaltung weist der Leiter der Zahnspule in den Wickelkopfabschnitten jeweils einen dritten Bereich einer dritten Biegung auf, wobei die zweite Biegung und die dritte Biegung eine zur ersten Biegung gegensätzliche Orientierung aufweisen, wobei der erste Bereich zwischen dem zweiten Bereich und dem dritten Bereich angeordnet ist. Durch derartig gegensätzlich orientierte Biegungen ist bei einem gegebenen minimalen Biegeradius der Leiterabstand im Nutabschnitt weiter verringerbar, ohne dass sich eine Wickelkopfausladung signifikant vergrößert.

Bei einer weiteren vorteilhaften Ausführungsform ist die Zahnspule achsensymmetrisch zu einer axialen Symmetrieachse ausgeführt. Durch die Symmetrie wird der Platzbedarf der Zahnspule optimiert und die Fertigung der elektrischen rotierenden Maschine vereinfacht.

Besonders vorteilhaft weist der Leiter der Zahnspule ein rechteckiges Leiterprofil auf. Bei einem rechteckigen Leiterprofil ist ein Querschnitt des Leiters rechteckig ausgeführt, wodurch ein höherer Füllfaktor, beispielsweise im Vergleich zu einem runden Leiterquerschnitt, erreicht wird.

In einer weiteren vorteilhaften Ausgestaltung ist der Leiter der Zahnspule um eine längere Kante des rechteckigen Leiterprofils gebogen. Eine derartige Biegung erlaubt einen geringeren minimalen Biegeradius.

In einer bevorzugten Ausführungsform umfasst der Leiter der Zahnspule eine Isolation, welche Glimmer aufweist. Beispielsweise weist die Isolation ein Glimmerband auf. Glimmer ist ein anorganischer Isolierstoff mit vergleichsweise sehr guten elektrischen Isolationseigenschaften und weist eine hohe Durchschlagsfestigkeit auf. Eine Isolation mit Glimmer ist insbesondere bei hohen Leistungen und geringen Leiterabständen vorteilhaft, um ausreichende Isolationseigenschaften zu gewährleisten.

Bei einer weiteren vorteilhaften Ausgestaltung weist der Leiter der Zahnspule voneinander elektrisch isolierte Teilleiter auf, welche jeweils ein rechteckiges oder quadratisches Leiterprofil aufweisen. Bei einer Wechselstromspeisung findet aufgrund eines Nutenquerfeldes eine Stromverdrängung statt. Durch die Stromverdrängung wird der elektrische Widerstand in der Zahnspule erhöht, was den Wirkungsgrad durch die entstehenden ohmschen Verluste reduziert. Ein Aufteilen des Leiters in Teilleiter verringert, beispielsweise durch eine derartige Stromverdrängung verursachte, Verluste. Die einzelnen Teilleiter sind außerdem einfacher, genauer und kostengünstiger formbar.

In einer bevorzugten Ausführungsform sind die Teilleiter zumindest im Nutabschnitt, insbesondere nach Art eines Roebelstabes, verdrillt. Durch das Verdrillen sind die einzelnen Teilleiter in Summe über die axiale Länge des Nutabschnitts gleichen magnetischen Randbedingungen ausgesetzt, sodass der Strom in den einzelnen Teilleitern vergleichmäßigt wird. Daher werden durch Verdrillen der Teilleiter Verluste reduziert.

Besonders vorteilhaft ist die Zahnspule planar ausgeführt. Durch eine planare Ausführung ist die Zahnspule leicht und kostengünstig herstellbar.

Bei einer weiteren vorteilhaften Ausführungsform ist die Zahnspule zumindest in einem Wickelkopfabschnitt abgekröpft. Beispielsweise ist die Zahnspule nach radial außen oder alternierend nach radial innen und außen abgekröpft. Durch das Abkröpfen wird eine zusätzliche Verkürzung der Wickelköpfe erreicht.

Im Folgenden wird die Erfindung anhand der in den Figuren dargestellten Ausführungsbeispiele näher beschrieben und erläutert.

Es zeigen:

FIG 1   einen Querschnitt einer elektrischen rotierenden Maschine mit einer Zahnspulenwicklung,

FIG 2   eine erste Ausführungsform einer Zahnspule,

FIG 3   eine zweite Ausführungsform einer Zahnspule,

FIG 4   einen Ausschnitt eines Stators mit Zahnspulen,

FIG 5   einen vergrößerten Querschnitt eines Stators mit einer ersten Ausführungsform einer Zahnspulenwicklung,

FIG 6   einen vergrößerten Querschnitt eines Stators mit einer zweiten Ausführungsform einer Zahnspulenwicklung,

FIG 7   einen Querschnitt eines Leiters einer Zahnspule und

FIG 8   eine schematische Darstellung eines Herstellungsverfahrens für eine Zahnspule.

Bei den im Folgenden erläuterten Ausführungsbeispielen handelt es sich um bevorzugte Ausführungsformen der Erfindung. Bei dem Ausführungsbeispiel stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

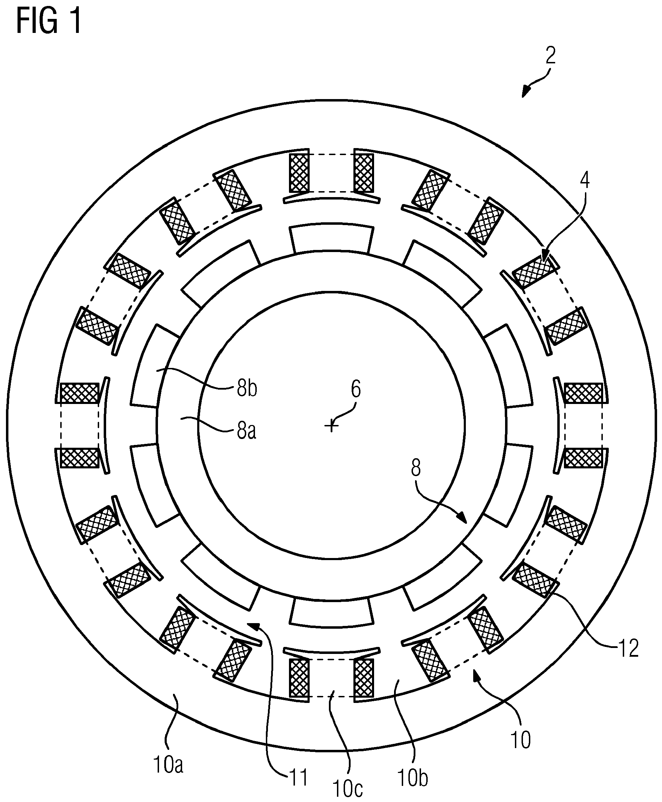

FIG 1 zeigt einen Querschnitt einer elektrischen rotierenden Maschine 2 mit einer Zahnspulenwicklung 4. Die elektrische rotierende Maschine 2 ist beispielhaft als permanenterregte Synchronmaschine ausgeführt und umfasst einen um eine Rotationsachse 6 rotierbaren Rotor 8. Die Rotationsachse 6 definiert eine Axialrichtung, eine Radialrichtung und eine Umfangsrichtung. Der Rotor 8 umfasst ein magnetfeldführendes, insbesondere wirbelstromunterdrückendes, Rotorelement 8a, welches beispielsweise als Rotorblechpaket ausgeführt ist, und Permanentmagnete 8b, wobei die Permanentmagnete 8b in Umfangsrichtung angeordnet und jeweils mit dem magnetfeldführenden Rotorelement 8a verbunden sind.

Darüber hinaus weist die elektrische rotierende Maschine 2 einen den Rotor 8 umgebenden Stator 10 auf, wobei zwischen dem Rotor 8 und dem Stator 10 ein Spalt 11, der insbesondere als Luftspalt ausgeführt ist, ausgebildet ist. Der Stator 10 umfasst ein magnetfeldführendes, insbesondere wirbelstromunterdrückendes, Statorelement 10a, welches beispielsweise als Statorblechpaket ausgeführt ist. Das Statorblechpaket ist beispielsweise aus einer Vielzahl von gestapelten Elektroblechen aufgebaut. Das magnetfeldführende Statorelement 10a bildet in Umfangsrichtung angeordnete Nuten 10b und Zähne 10c aus. Die Zahnspulenwicklung 4 umfasst eine Mehrzahl von Zahnspulen 12, welche in den Nuten 10b angeordnet sind und jeweils einen Zahn 10c des magnetfeldführenden Statorelements 10a umschließen.

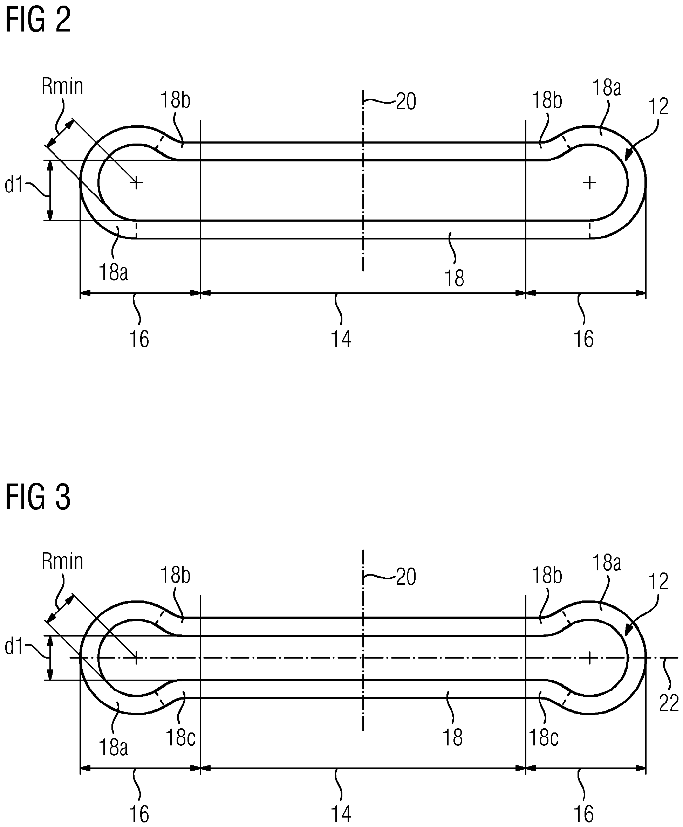

FIG 2 zeigt eine erste Ausführungsform einer Zahnspule 12, welche einen Nutabschnitt 14 aufweist, wobei sich an den axialen Enden des Nutabschnitts 14 jeweils ein Wickelkopfabschnitt 16 anschließt. Der Leiter 18 der geschlossenen Zahnspule 12, welcher beispielsweise aus Kupfer hergestellt ist, verläuft im Nutabschnitt 14 in hin- und rückwärtiger Richtung gerade und im Wesentlichen parallel zur Axialrichtung. Die Zahnspule 12 ist planar ausgeführt. In den Wickelkopfabschnitten 16 weist der Leiter 18 der Zahnspule 12 jeweils einen ersten Bereich 18a einer ersten Biegung und einen zweiten Bereich 18b einer zweiten Biegung auf. Die zweite Biegung im zweiten Bereich 18b weist eine zur ersten Biegung des ersten Bereichs 18a gegensätzliche Orientierung auf. Eine gegensätzliche Orientierung einer Biegung ist insbesondere eine Krümmung des Leiters in die exakt gegensätzliche Richtung. Beispielsweise ist der Leiter 18, vom Nutabschnitt 14 aus in Axialrichtung betrachtet, im ersten Bereich 18a rechtsgekrümmt und im zweiten Bereich 18b linksgekrümmt ausgeführt, sodass die zweite Biegung eine zur ersten Biegung gegensätzliche Orientierung aufweist. Aufgrund der gegensätzlichen Orientierungen der Biegungen wird eine S-Form des Leiters 18 in jeweils einem Teil des Wickelkopfabschnitts 16 ausgebildet. Die jeweiligen Bereiche 18a, 18b, in denen die S-Form ausgebildet ist, sind derartig angeordnet, dass die Zahnspule 12 achsensymmetrisch zu einer radialen Symmetrieachse 20 ausgeführt ist, wobei die radiale Symmetrieachse 20 axial in der Mitte des Nutabschnitts 14 verlaufend angeordnet ist und senkrecht zur Axialrichtung verläuft. Die S-Form des Leiters 18 in den jeweiligen Wickelkopfabschnitten 16 und die achsensymmetrische Anordnung der Zahnspule 12 ermöglichen im Nutabschnitt 14 einen geringeren ersten Abstand d1 der gerade und im Wesentlichen parallel zur Axialrichtung verlaufenden Leiterabschnitte bei einem gegebenen minimalen Biegeradius Rmin, ohne den Leiter 18 in der Biegung unzulässig zu verformen. Der erste Abstand d1 ist kleiner als der doppelte minimale Biegeradius Rmin:

$$d1 < 2 \cdot Rmin$$

Der minimale Biegeradius Rmin ist abhängig von einer Geometrie des Leiters 18, welche wiederum von der erforderlichen Stromtragfähigkeit abhängt. Eine unzulässige Verformung tritt beispielsweise ein, wenn die elektrischen, thermischen und/oder mechanischen Eigenschaften des Leiters 18 merklich beeinflusst sind. Bei einem geringeren ersten Abstand d1 sind beispielsweise schmalere Zähne 10c bei einem gegebenen Leiterdurchmesser, welcher mit einer gegebenen Stromtragfähigkeit einhergeht, verwendbar. Eine geringere Zahnbreite ist insbesondere bei hochpoligen elektrischen rotierenden Maschinen 2 vorteilhaft.

Darüber hinaus weist der Leiter 18 der Zahnspule 12 ein rechteckiges Leiterprofil auf. Bei einem rechteckigen Leiterprofil ist ein Querschnitt des Leiters 18 rechteckig ausgeführt, sodass, beispielsweise im Vergleich zu einem runden Leiterprofil, ein höherer Füllfaktor erreicht wird. In den Wickelkopfabschnitten 16 ist der Leiter 18 hochkant, das heißt um eine längere Kante des rechteckigen Leiterprofils, gebogen, was einen geringeren minimalen Biegeradius Rmin erlaubt, ohne den Leiter 18 in der Biegung unzulässig zu verformen.

Der Leiter 18 der Zahnspule 12 weist Teilleiter auf, welche aus Gründen der Übersichtlichkeit in FIG 2 nicht dargestellt sind. Die Teilleiter weisen jeweils ein rechteckiges oder quadratisches Leiterprofil auf, wobei die Teilleiter zumindest im Nutabschnitt 14, insbesondere nach Art eines Roebelstabes, verdrillt sind. Durch das Verdrillen sind die einzelnen Teilleiter in Summe über die axiale Länge des Statorblechpakets gleichen magnetischen Randbedingungen ausgesetzt, sodass der Strom in den einzelnen Teilleitern vergleichmäßigt wird. Daher werden Verluste durch Verdrillen der Spulenstäbe reduziert.

Der Leiter 18 der Zahnspule 12 umfasst darüber hinaus eine Isolation, welche Glimmer aufweist, um, insbesondere bei hohen Leistungen und möglichst geringen Leiterabständen, ausreichende Isolationseigenschaften zu gewährleisten. Die Isolation ist aus Gründen der Übersichtlichkeit in FIG 2 nicht dargestellt. Die weitere Ausführung der Zahnspule 12 in FIG 2 entspricht der in FIG 1.

FIG 3 zeigt eine zweite Ausführungsform einer Zahnspule 12. In den Wickelkopfabschnitten 16 weist der Leiter 18 der Zahnspule 12 jeweils einen ersten Bereich 18a einer ersten Biegung, einen zweiten Bereich 18b einer zweiten Biegung und einen dritten Bereich 18c einer dritten Biegung auf, wobei die zweite Biegung und die dritte Biegung eine zur ersten Biegung gegensätzliche Orientierung aufweisen und wobei der erste Bereich 18a zwischen dem zweiten Bereich 18b und dem dritten Bereich 18c angeordnet ist. Aufgrund der gegensätzlichen Orientierung der ersten Biegung zur zweiten und dritten Biegung wird eine Doppel-S-Form des Leiters 18 in jeweils zumindest einem Teil des Wickelkopfabschnitts 16 ausgebildet. Die jeweiligen Bereiche 18a, 18b, 18c, in denen die Doppel-S-Form ausgebildet ist, sind derartig angeordnet, dass die Zahnspule 12 achsensymmetrisch zur radialen Symmetrieachse 20 ausgeführt ist. Zusätzlich sind die jeweiligen Bereiche 18a, 18b, 18c, in denen die Doppel-S-Form ausgebildet ist, derartig angeordnet, dass die Zahnspule 12 achsensymmetrisch zu einer axialen Symmetrieachse 22 ausgeführt ist, wobei die axiale Symmetrieachse 22 parallel zur Axialrichtung verläuft. Die Doppel-S-Form des Leiters 18 in den jeweiligen Wickelkopfabschnitten 16 und die achsensymmetrische Anordnung der Zahnspule 12 ermöglichen im Nutabschnitt 14 einen, im Vergleich zur Zahnspule 12 in FIG 2, noch geringeren ersten Abstand d1 der gerade und im Wesentlichen parallel zur Axialrichtung verlaufenden Leiterabschnitte bei einem gegebenen minimalen Biegeradius Rmin, ohne dass sich eine Wickelkopfausladung signifikant vergrößert. Die weitere Ausführung der Zahnspule 12 in FIG 3 entspricht der in FIG 2.

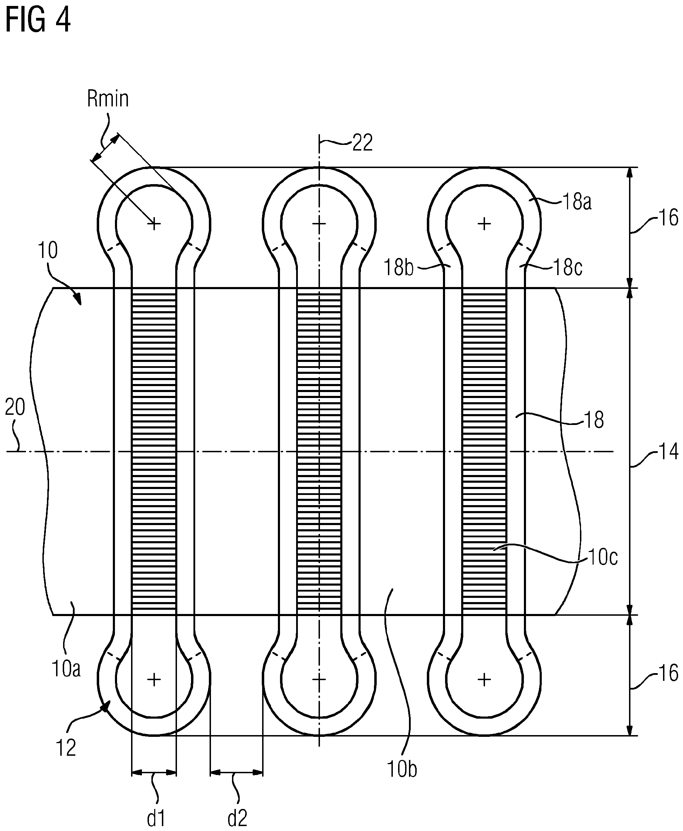

FIG 4 zeigt einen Ausschnitt eines Stators 10 mit Zahnspulen 12. Die Zahnspulen 12 sind in Nuten 10b angeordnet und umschließen jeweils einen Zahn 10c des magnetfeldführenden Statorelements 10a. Die Zahnspulen 12 sind planar ausgeführt und weisen einen zweiten Abstand d2 zueinander auf. Alternativ sind die Zahnspulen 12 zumindest in einem Wickelkopfabschnitt 16, beispielsweise nach radial außen oder alternierend nach radial innen und außen, abgekröpft. Die weitere Ausführung der Zahnspulen 12 in FIG 4 entspricht der in FIG 3.

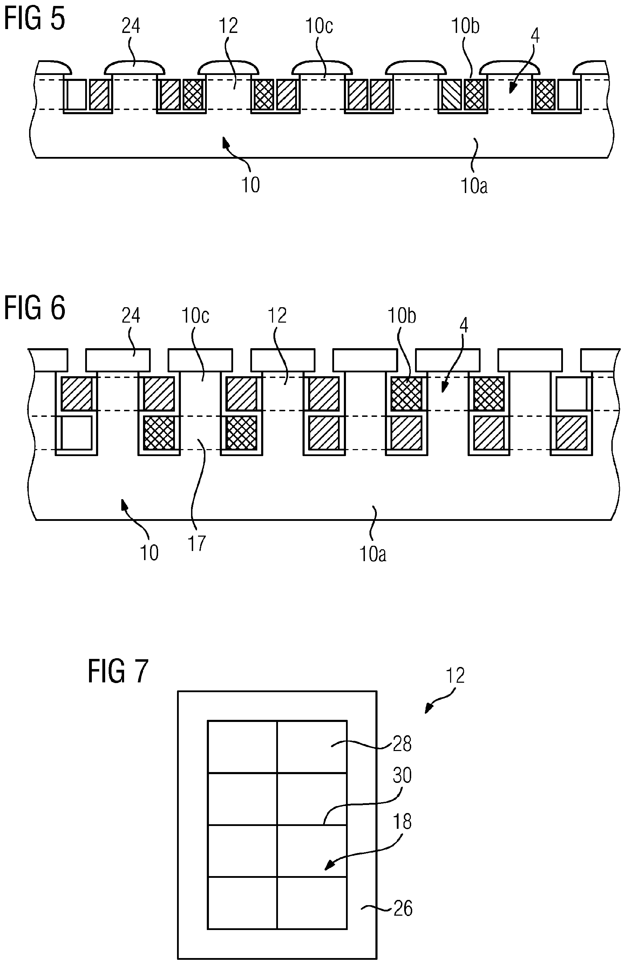

FIG 5 zeigt einen vergrößerten Querschnitt eines Stators 10 mit einer ersten Ausführungsform einer Zahnspulenwicklung 4, wobei die Zahnspulenwicklung 4 als Zweischichtwicklung ausgeführt ist. Die Zahnspulen 12 umschließen jeweils einen Zahn 10c des magnetfeldführenden Statorelements 10a und sind in Umfangsrichtung nebeneinander angeordnet. Die Zähne 10c weisen Polschuhe 24 auf, um den durch die Zahnspulenwicklung 4 erzeugten Fluss des Stators 10 zu lenken. Die weitere Ausführung des Stators 10 und der Zahnspulen 12 in FIG 5 entspricht der in FIG 4.

FIG 6 zeigt einen vergrößerten Querschnitt eines Stators 10 mit einer zweiten Ausführungsform einer Zahnspulenwicklung 4, wobei die Zahnspulenwicklung 4 als Zweischichtwicklung ausgeführt ist. Die Zahnspulen 12 umschließen jeweils einen Zahn 10c des magnetfeldführenden Statorelements 10a und sind in Umfangsrichtung alternierend übereinander angeordnet, was eine geringere Breite der Nuten 10b ermöglicht. Eine Ausführungsform mit nur einer Schicht übereinander ist ebenfalls möglich, dies wird als Einschichtwicklung bezeichnet. Eine geringere Nutbreite ist insbesondere bei hochpoligen elektrischen rotierenden Maschinen 2 vorteilhaft. Die weitere Ausführung des Stators 10 und der Zahnspulen 12 in FIG 5 entspricht der in FIG 4.

FIG 7 zeigt einen Querschnitt eines Leiters 18 einer Zahnspule 12. Der Leiter 18 umfasst eine Isolation 26, welche beispielsweise mit Glimmer gefertigt ist, um eine ausreichende Durchschlagsfestigkeit, beispielsweise für 3,3 kV, zu gewährleisten. Beispielsweise weist die Isolation ein Glimmerband auf und ist mit einem Harz getränkt. Durch das Harz wird das Risiko einer Teilentladung minimiert. Darüber hinaus weist der Leiter 18 mehrere Teilleiter 28 auf, welche jeweils ein rechteckiges oder quadratisches Leiterprofil aufweisen. Die Teilleiter sind jeweils mit einer Teilleiterisolation 30 isoliert.

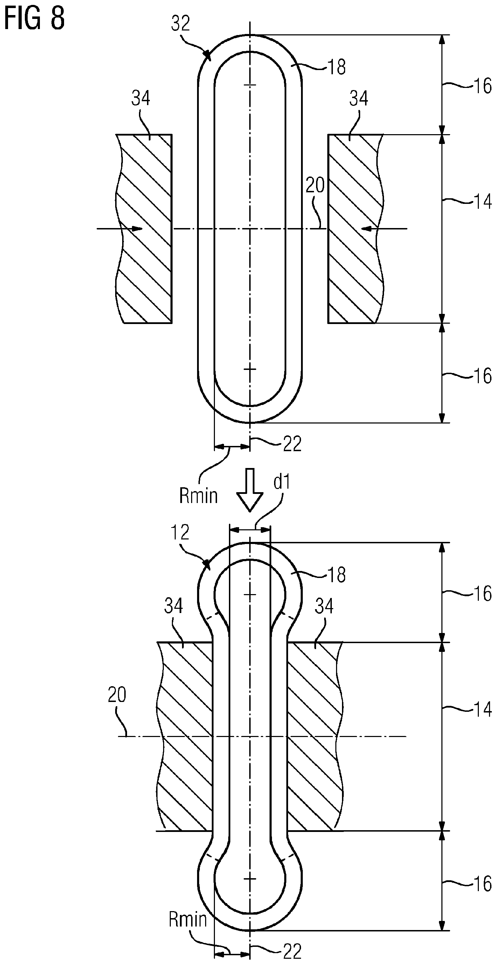

FIG 8 zeigt eine schematische Darstellung eines Herstellungsverfahrens für eine Zahnspule 12. Es wird eine Rohspule 32, welche einen Leiter 18 aufweist, der eine geschlossene Leiterschleife bildet, bereitgestellt, wobei der Leiter 18 in den Wickelkopfabschnitten 16 mit einem minimalen Biegeradius Rmin gebogen ist. Beispielsweise ist die Rohspule 32 als Nadelspule ausgeführt. Eine Nadelspule ist eine symmetrische Flachspule und ist insbesondere als ein Oval ausgeführt, welches aus zwei gegenüberliegenden Halbkreisbögen und zwei parallelen Geradenstücken zusammengesetzt ist. Der Leiter 18 der Rohspule 32 wird vor dem Biegevorgang mit einem Isolationsmaterial, welches Glimmer umfasst, isoliert, um eine ausreichende Durchschlagsfestigkeit zu gewährleisten. Beispielsweise wird ein Glimmerband verwendet. Die Rohspule 32 wird daraufhin, beispielsweise im Bereich der Wickelkopfabschnitte 16 fixiert. In einem folgenden Schritt wird der Leiter 18 über Führungselemente 34 im Bereich des Nutabschnitts 16 in Richtung der radialen Symmetrieachse 20 beidseitig so zusammengedrückt, dass der Leiter 18 in den Wickelkopfabschnitten 16 jeweils in einem ersten Bereich 8a in eine erste Richtung und in einem zweiten Bereich 8b und in einem dritten Bereich 8c in eine zweite Richtung gebogen wird, wobei die erste Richtung und die zweite Richtung gegensätzlich orientiert sind, sodass die Ausführung der entstehenden Zahnspule 12 der in FIG 3 entspricht. Die Führungselemente 34 berühren den Leiter 18 im Bereich des Nutabschnitts 16 vollflächig, sodass der Leiter 18 in hin- und rückwärtiger Richtung gerade und im Wesentlichen parallel zur Axialrichtung verläuft und einen ersten Abstand d1, welcher kleiner als der doppelte minimale Biegeradius Rmin ist, aufweist. In einem weiteren Schritt wird das Isolationsmaterial nach dem Biegevorgang mit einem Harz getränkt.

Alternativ wird nur ein Führungselement 34 verwendet, das den Leiter 18 im Bereich des Nutabschnitts 16 in Richtung der radialen Symmetrieachse 20 einseitig so zusammendrückt, dass die Ausführung der entstehenden Zahnspule 12 der in FIG 2 entspricht.

Zusammenfassend betrifft die Erfindung eine Zahnspule 12 für einen Stator 10 einer elektrischen rotierenden Maschine 2, welche einen Leiter 18 aufweist, der eine geschlossene Leiterschleife bildet, wobei die Zahnspule 12 einen Nutabschnitt 14 aufweist, wobei sich an den axialen Enden des Nutabschnitts 14 jeweils ein Wickelkopfabschnitt 16 anschließt. Damit die Zahnspule 12 bei einer hohen Stromtragfähigkeit und einer geringen Zahnbreite einsetzbar ist, wird vorgeschlagen, dass der Leiter 18 der Zahnspule 12 in den Wickelkopfabschnitten 16 jeweils einen ersten Bereich 8a einer ersten Biegung und zumindest einen zweiten Bereich 8b einer zweiten Biegung aufweist, wobei die zweite Biegung eine zur ersten Biegung gegensätzliche Orientierung aufweist.

**Patentansprüche**

1. Zahnspule (12) für einen Stator (10) einer elektrischen rotierenden Maschine (2),
   welche einen Leiter (18) aufweist, der eine geschlossene Leiterschleife bildet,
   wobei die Zahnspule (12) einen Nutabschnitt (14) aufweist, wobei sich an den axialen Enden des Nutabschnitts (14) jeweils ein Wickelkopfabschnitt (16) anschließt,
   **dadurch gekennzeichnet, dass** der Leiter (18) der Zahnspule (12) in den Wickelkopfabschnitten (16) jeweils einen ersten Bereich (8a) einer ersten Biegung und zumindest einen zweiten Bereich (8b) einer zweiten Biegung aufweist,
   wobei die zweite Biegung eine zur ersten Biegung gegensätzliche Orientierung aufweist.

2. Zahnspule (12) nach Anspruch 1,
   wobei die Zahnspule (12) achsensymmetrisch zu einer radialen Symmetrieachse (20) ausgeführt ist.

3. Zahnspule (12) nach einem der Ansprüche 1 oder 2,
   wobei der Leiter (18) der Zahnspule (12) in den Wickelkopfabschnitten (16) jeweils einen dritten Bereich (8c) einer dritten Biegung aufweist,
   wobei die zweite Biegung und die dritte Biegung eine zur ersten Biegung gegensätzliche Orientierung aufweisen,
   wobei der erste Bereich (8a) zwischen dem zweiten Bereich (8b) und dem dritten Bereich (8c) angeordnet ist.

4. Zahnspule (12) nach Anspruch 3,

wobei die Zahnspule (12) achsensymmetrisch zu einer axialen Symmetrieachease (22) ausgeführt ist.

5. Zahnspule (12) nach einem der vorherigen Ansprüche, wobei der Leiter (18) der Zahnspule (12) ein rechteckiges Leiterprofil aufweist.

6. Zahnspule (12) nach Anspruch 5, wobei der Leiter (18) der Zahnspule (12) um eine längere Kante des rechteckigen Leiterprofils gebogen ist.

7. Zahnspule (12) nach einem der vorherigen Ansprüche, wobei der Leiter (18) der Zahnspule (12) eine Isolation (26) umfasst, welche Glimmer aufweist.

8. Zahnspule (12) nach einem der vorherigen Ansprüche, wobei der Leiter (18) der Zahnspule (12) voneinander elektrisch isolierte Teilleiter (28) aufweist, welche jeweils ein rechteckiges oder quadratisches Leiterprofil aufweisen.

9. Zahnspule (12) nach Anspruch 8, wobei die Teilleiter (28) zumindest im Nutabschnitt (14), insbesondere nach Art eines Roebelstabes, verdrillt sind.

10. Zahnspule (12) nach einem der vorherigen Ansprüche, wobei die Zahnspule (12) planar ausgeführt ist.

11. Zahnspule (12) nach einem der Ansprüche 1 bis 9, wobei die Zahnspule (12) zumindest in einem Wickelkopfabschnitt (16) abgekröpft ist.

12. Stator (10) für eine elektrische rotierende Maschine (2) mit einem magnetfeldführenden Statorelement (10a) und Zahnspulen (12) nach einem der Ansprüche 1 bis 11, wobei das magnetfeldführende Statorelement (10a) Nuten (10b) und Zähne (10c) aufweist, wobei die Zahnspulen (12) in den Nuten (10b) angeordnet sind und jeweils einen Zahn (10c) des magnetfeldführenden Statorelements (10a) umschließen.

13. Elektrische rotierende Maschine (2) mit mindestens einem Stator (10) nach Anspruch 12.

14. Verfahren zur Herstellung einer Zahnspule (12) für einen Stator (10) einer elektrischen rotierenden Maschine (2), wobei eine geschlossene Rohspule (32), bereitgestellt wird, welche einen Leiter (18) aufweist, der eine geschlossene Leiterschleife bildet, wobei ein Nutabschnitt (14) bereitgestellt wird, wobei Wickelkopfabschnitte (16) bereitgestellt werden, welche an den axialen Enden des Nutabschnitts (14) angeordnet werden, **dadurch gekennzeichnet, dass** der Leiter (18) in den Wickelkopfabschnitten (16) jeweils in einem ersten Bereich (8a) in eine erste Richtung und zumindest in einem zweiten Bereich (8b) in eine zweite Richtung gebogen wird, wobei die erste Richtung und die zweite Richtung gegensätzlich orientiert sind.

15. Verfahren (12) nach Anspruch 14, wobei die Zahnspule (12) derartig gebogen wird, dass sie achsensymmetrisch zu einer radialen Symmetrieachse (20) ausgeführt ist.

16. Verfahren nach einem der Ansprüche 14 oder 15, wobei der Leiter (18) in den Wickelkopfabschnitten (16) jeweils in einem dritten Bereich (8c) in die zweite Richtung gebogen wird, wobei der erste Bereich (8a) zwischen dem zweiten Bereich (8b) und dem dritten Bereich (8c) angeordnet ist.

17. Verfahren nach Anspruch 16, wobei die Zahnspule (12) derartig gebogen wird, dass sie achsensymmetrisch zu einer axialen Symmetrieachse (22) ausgeführt ist.

18. Verfahren nach einem der Ansprüche 14 bis 17, wobei der Leiter (18) der Zahnspule (12), welcher ein rechteckiges Leiterprofil aufweist, um eine längere Kante des rechteckigen Leiterprofils gebogen wird.

19. Verfahren nach einem der Ansprüche 14 bis 18, wobei der Leiter (18) der Rohspule (32) vor dem Biegevorgang mit einem Isolationsmaterial, welches Glimmer umfasst, isoliert wird.

20. Verfahren nach Anspruch 19, wobei das Isolationsmaterial nach dem Biegevorgang mit einem Harz getränkt wird.

FIG 1

FIG 2

Rmin

18b

20

18b

18a

12

d1

18a

18

16

14

16

FIG 3

Rmin

18b

20

18b

18a

12

d1

22

18a

18c

18

18c

16

14

16

# FIG 4

FIG 5

FIG 6

FIG 7

# FIG 8

EP 3 605 797 A1

**Europäisches Patentamt**
**European Patent Office**
**Office européen des brevets**

# EUROPÄISCHER RECHERCHENBERICHT

**Nummer der Anmeldung**

EP 18 18 6845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/201935 A1 (NAKAYAMA KENICHI [JP] ET AL) 28. August 2008 (2008-08-28) | 1,2,5-8, 10-15, 18-20 | INV. H02K3/18 H02K15/04 |
| Y | * Paragraphen 83, 89, 114; Abbildungen 10, 18A, 18B, * ----- | 9 | ADD. H02K3/30 |
| X | EP 1 346 381 B1 (KONINKL PHILIPS ELECTRONICS NV [NL]) 1. April 2009 (2009-04-01) * Abbildung 1 * ----- | 1-4, 14-17 | |
| X | JP 2014 121102 A (SEIKO EPSON CORP) 30. Juni 2014 (2014-06-30) * Abbildungen 7, 30 * ----- | 1,14 | |
| X | WO 2013/179491 A1 (YASKAWA DENKI SEISAKUSHO KK [JP]; TOMOHARA KENJI [JP]; MAEMURA AKIHIKO) 5. Dezember 2013 (2013-12-05) * Abbildungen 19,20 * ----- | 1,14 | |
| Y | GB 1 003 991 A (LARBORDE & KUPFER SA) 8. September 1965 (1965-09-08) * Zusammenfassung; Abbildung 3 * ----- | 9 | RECHERCHIERTE SACHGEBIETE (IPC) H02K |
| A | EP 3 043 456 A1 (MICAMATION AG [CH]) 13. Juli 2016 (2016-07-13) * Abbildungen 2, 3a, 6, 7 * ----- | 1 | |
| A | JP H11 75351 A (TOSHIBA CORP) 16. März 1999 (1999-03-16) * Abbildung 34 * ----- | 1,3 | |

Der vorliegende Recherchenbericht wurde für alle Patentansprüche erstellt

| Recherchenort | Abschlußdatum der Recherche | Prüfer |
|---|---|---|
| Den Haag | 11. September 2018 | Jabri, Tarak |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 18 6845

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2018

| Im Recherchenbericht angeführtes Patentdokument | Datum der Veröffentlichung | Mitglied(er) der Patentfamilie | Datum der Veröffentlichung |
|---|---|---|---|
| US 2008201935 A1 | 28-08-2008 | JP 4420041 B2<br>JP 2008211880 A<br>US 2008201935 A1 | 24-02-2010<br>11-09-2008<br>28-08-2008 |
| EP 1346381 B1 | 01-04-2009 | EP 1346381 A1<br>JP 2004516649 A<br>KR 20020074515 A<br>TW 559839 B<br>US 2002079775 A1<br>US 2005236923 A1<br>WO 0249050 A1 | 24-09-2003<br>03-06-2004<br>30-09-2002<br>01-11-2003<br>27-06-2002<br>27-10-2005<br>20-06-2002 |
| JP 2014121102 A | 30-06-2014 | KEINE | |
| WO 2013179491 A1 | 05-12-2013 | CN 104364996 A<br>JP 5909790 B2<br>JP WO2013179491 A1<br>WO 2013179491 A1 | 18-02-2015<br>27-04-2016<br>18-01-2016<br>05-12-2013 |
| GB 1003991 A | 08-09-1965 | FR 1349250 A<br>GB 1003991 A | 17-01-1964<br>08-09-1965 |
| EP 3043456 A1 | 13-07-2016 | KEINE | |
| JP H1175351 A | 16-03-1999 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3176924 A1
- EP 3297131 A1
- EP 1207613 A2
- US 3837072 A
- DE 102004044986 A1